# EUROPÄISCHE PATENTSCHRIFT

(11) **EP 3 768 559 B1**
(45) Veröffentlichungstag und Bekanntmachung des Hinweises auf die Patenterteilung: **19.10.2022**
(21) Anmeldenummer: 19709897.3
(22) Anmeldetag: 07.03.2019
(51) Int. Cl.: B60R 21/203

(54) **LENKRADBAUGRUPPE**
STEERING WHEEL ASSEMBLY
ENSEMBLE FORMANT VOLANT DE DIRECTION

(30) Priorität: 23.03.2018 DE 202018101635 U
(43) Veröffentlichungstag der Anmeldung: 27.01.2021
(73) Patentinhaber: ZF Automotive Safety Germany GmbH, 63743 Aschaffenburg (DE)
(72) Erfinder: SCHÜTZ, Dominik, 63872 Heimbuchenthal (DE)
(74) Vertreter: ZF Patentabteilung - DIPS
(86) Internationale Anmeldenummer: PCT/EP2019/055664
(87) Internationale Veröffentlichungsnummer: WO 2019/179777

(56) Entgegenhaltungen:
- WO-A1-2014/080713
- DE-A1-102004 051 942
- DE-A1-102006 009 261
- DE-T2- 69 307 187
- DE-U1-202007 019 605
- DE-U1-202017 104 817

## Beschreibung

Die Erfindung betrifft eine Lenkradbaugruppe gemäß dem Oberbegriff des Anspruchs 1.

Bei vielen Fahrzeuglenkrädern treten im Leerlauf oder in bestimmten Geschwindigkeitsbereichen des Fahrzeugs Vibrationen auf, die vom Fahrer als störend empfunden werden. Diese Vibrationen sind unter anderem auf die starre Kopplung des Lenkrads mit der Lenksäule zurückzuführen.

Es ist bekannt, zur Vermeidung der unerwünschten Lenkradschwingungen sogenannte Schwingungstilger einzusetzen, um die Eigenfrequenz des Gesamtsystems so abzustimmen, dass sie in einem unkritischen Bereich liegt. Derzeit wird als gegenschwingende Tilgermasse beispielsweise der Gasgenerator eines im Lenkrad angeordneten Gassackmoduls eingesetzt.

Da sich die Schwingungstilgung mit zunehmender Tilgermasse verbessert, ist in der DE 37 10 173 C2 bereits eine Kraftfahrzeuglenkung beschrieben, bei der in vorteilhafter Weise das gesamte Gassackmodul als Tilgermasse genutzt wird. Über die Schersteifigkeit der eingesetzten Schwingungsdämpfer lässt sich die erste Eigenfrequenz des Systems Lenkrad/Modul so niedrig abstimmen, dass sie in einem Geschwindigkeitsbereich des Fahrzeugs zu liegen kommt, in dem noch keine hohen Anregungsamplituden auftreten (beispielsweise bei etwa 120 km/h).

Die DE 10 2006 009 261 A1 zeigt eine gattungsgemäße Lenkradbaugruppe mit einem Mechanismus, der zur Betätigung einer Fahrzeughupe eine lineare Bewegung des Airbagmodul relativ zum Lenkrad ermöglicht, jedoch eine Kippbewegung des Airbagmoduls im Wesentlichen blockiert.

Die DE 20 2017 104 817 U1 offenbart eine Lenkradbaugruppe, bei welcher ein Schraubbolzen fest mit dem Lenkradskelett verschraubt und ein Anbindungsbauteil schwingfähig am Schraubbolzen gelagert ist, wobei das Anbindungsbauteil insbesondere als Träger für ein Gassackmodul dient. Die dargestellte Schwingungstilgerkonstruktion ist besonders kompakt und weist ein für die Reduktion der Lenkradvibrationen nutzbares Resonanzfeld auf, welches in begrenztem Maße an die Anforderungen und Randbedingungen des jeweiligen Fahrzeugs anpassbar ist. Allerdings stößt der konstruktive Aufbau der Lenkradbaugruppe gemäß DE 20 2017 104 817 U1 an seine Grenzen, wenn Resonanzfelder in einem besonders tiefen Frequenzspektrum gefordert werden, beispielsweise für Frequenzen kleiner 30 Hz.

Aufgabe der Erfindung ist daher die Schaffung einer besonders kompakten Lenkradbaugruppe, wobei ein Lenkradskelett und ein Anbindungsbauteil für ein Gassackmodul derart schwingfähig gekoppelt sind, dass sich im späteren Fahrzeugbetrieb ein Resonanzfeld ergibt, welches auch besonders geringe Frequenzen abdecken kann.

Erfindungsgemäß wird diese Aufgabe gelöst durch eine Lenkradbaugruppe mit den Merkmalen des Anspruchs 1. Hierbei ist ein zweites elastisches Dämpfungselement vorgesehen, welches das Verbindungselement schwingfähig mit dem Lenkradskelett koppelt. Da in diesem Fall sowohl zwischen dem Anbindungsbauteil und dem Verbindungselement als auch zwischen dem Lenkradskelett und dem Verbindungselement eine schwingungsdämpfende Lagerung vorgesehen ist, entsteht in vorteilhafter Weise ein Schwingsystem mit gekoppelten Oszillatoren, also ein gedämpftes Zweimassen-Schwingsystem, dessen Resonanzfeld über ein besonders großes Frequenzspektrum anpassbar ist und im späteren Fahrbetrieb beispielsweise auch Frequenzen kleiner 30 Hz umfassen kann. Je nach Detailkonstruktion der Lenkradbaugruppe wirkt sich das geänderte Schwingsystem dabei kaum oder überhaupt nicht auf den Bauraumbedarf der Schwingungstilgerkonstruktion aus.

Gemäß einer Ausführungsform der Lenkradbaugruppe ist das Anbindungsbauteil eine Montageplatte für ein Gassackmodul. Nach einer Befestigung der Montageplatte am Lenkradskelett wird das Gassackmodul mit der Montageplatte verbunden, insbesondere verrastet. Eine Relativbewegung zum Betätigen einer Fahrzeughupe kann dann wahlweise zwischen Gassackmodul und Montageplatte oder innerhalb des Gassackmoduls stattfinden. Alternativ ist auch denkbar, dass das Anbindungsbauteil selbst bereits eine Komponente des Gassackmoduls ist. In diesem Fall kann eine Relativbewegung zum Betätigen einer Fahrzeughupe dann wahlweise zwischen Anbindungsbauteil und Lenkradskelett oder innerhalb des Gassackmoduls stattfinden.

Das Lenkradskelett ist bevorzugt ein einstückiges Metallteil, welches zum Beispiel eine Lenkradnabe, wenigstens eine Speiche sowie einen Lenkradkranz bildet, kann aber optional auch Anbauteile umfassen, die mit dem Metallteil im Wesentlichen starr verbunden, insbesondere fest verschraubt oder verschweißt sind.

Vorzugsweise ist das erste Dämpfungselement im Wesentlichen spielfrei am Anbindungsbauteil fixiert, insbesondere formschlüssig mit dem Anbindungsbauteil verbunden. Analog ist das zweite Dämpfungselement bevorzugt im Wesentlichen spielfrei am Lenkradskelett fixiert, insbesondere formschlüssig mit dem Lenkradskelett verbunden. Auf diese Weise lässt sich in einem Ruhezustand der Lenkradbaugruppe das Anbindungsbauteil relativ zum Lenkradskelett sehr genau positionieren. Dies trägt später bei einem fertig zusammengebauten Fahrzeuglenkrad zu geringen Spaltmaßtoleranzen zwischen dem Gassackmodul und angrenzenden Lenkradelementen bei.

Erfindungsgemäß weisen das Lenkradskelett und das Anbindungsbauteil Befestigungsöffnungen auf, wobei das Verbindungselement einen Verbindungsbolzen umfasst, der sich längs einer Bolzenachse durch diese Befestigungsöffnungen hindurch erstreckt.

Vorzugsweise ist dabei mit Bezug auf die Bolzenachse wenigstens eines der Dämpfungselemente axial vorgespannt. Über die axiale Vorspannung lässt sich mit geringem Aufwand das Resonanzfeld der Schwingungstilgerkonstruktion beeinflussen und idealerweise auf einen gewünschten Frequenzbereich einstellen.

Gemäß der Erfindung ist das erste Dämpfungselement als Dämpfungshülse ausgeführt und mit Bezug auf die Bolzenachse radial zwischen dem Verbindungsbolzen und einem Rand der Befestigungsöffnung des Anbindungsbauteils angeordnet. Ferner ist auch das zweite Dämpfungselement als Dämpfungshülse ausgeführt und mit Bezug auf die Bolzenachse radial zwischen dem Verbindungsbolzen und einem Rand der Befestigungsöffnung des Lenkradskeletts angeordnet. Dadurch lässt sich die schwingungsgedämpfte Lagerung des Anbindungsbauteils am Lenkradskelett mit besonders geringem Bauraumbedarf realisieren, was sich wiederum positiv auf eine möglichst kompakte Konstruktion der Lenkradbaugruppe auswirkt.

Das Verbindungselement umfasst bevorzugt einen Schraubbolzen mit einem Schraubenkopf und einem Schraubenschaft sowie eine zumindest teilweise auf den Schraubenschaft aufdrehbare Schraubenmutter.

Hierbei kann sich der Schraubbolzen in axialer Richtung vom Schraubenkopf über einen ersten Schaftabschnitt und einen angrenzenden zweiten Schaftabschnitt bis zu einem freien Ende erstrecken, wobei die Schaftabschnitte unterschiedliche Schaftdurchmesser aufweisen, die Schraubenmutter auf den zweiten Schaftabschnitt aufgeschraubt ist und die Dämpfungselemente im Bereich des ersten Schaftabschnitts axial zwischen dem Schraubenkopf und der Schraubenmutter angeordnet, insbesondere geklemmt sind.

Gemäß einer konstruktiv besonders einfachen und kostengünstigen Ausführungsvariante der Lenkradbaugruppe sind das erste Dämpfungselement und das zweite Dämpfungselement einstückig ausgeführt und bilden folglich ein einziges Dämpfungselement.

Alternativ sind zwei separate Dämpfungselemente vorgesehen, die entweder unmittelbar aneinander angrenzen oder axial beabstandet sein können. Auf diese Weise lassen sich die schwingfähigen oder schwingungsgedämpften Kopplungen zwischen dem Anbindungsbauteil und dem Verbindungselement sowie zwischen dem Lenkradskelett und dem Verbindungselement individuell und unabhängig voneinander beeinflussen, beispielsweise über die Geometrie und/oder das Material der einzelnen Dämpfungselemente.

Besonders bevorzugt sind in einer unbelasteten Grundstellung der Lenkradbaugruppe sowohl das Anbindungsbauteil als auch das Lenkradskelett vom Verbindungselement beabstandet und stützen sich ausschließlich über das erste elastische Dämpfungselement und/oder das zweite elastische Dämpfungselement am Verbindungselement ab. Ist das Verbindungselement konkret als Verbindungsbolzen ausgeführt, stützen sich das Anbindungsbauteil und das Lenkradskelett mit Bezug auf die Bolzenachse jeweils sowohl in axialer Richtung als auch in radialer Richtung ausschließlich über das erste und/oder zweite elastische Dämpfungselement am Verbindungselement ab. Dadurch ergibt sich bei beliebigen äußeren Anregungen des Zweimassen-Schwingsystem eine gute Dämpfung, mit der sich auch Resonanzfelder in einem besonders tiefen Frequenzspektrum realisieren lassen.

Weitere Merkmale und Vorteile der Erfindung ergeben sich aus der nachfolgenden Beschreibung bevorzugter Ausführungsformen unter Bezugnahme auf die Zeichnungen. In diesen zeigt:
- Figur 1 ein Schnittdetail der erfindungsgemäßen Lenkradbaugruppe gemäß einer Ausführungsform;
- Figur 2 ein Schnittdetail der erfindungsgemäßen Lenkradbaugruppe gemäß einer weiteren Ausführungsform; und
- Figur 3 ein Schnittdetail der erfindungsgemäßen Lenkradbaugruppe gemäß noch einer weiteren Ausführungsform.

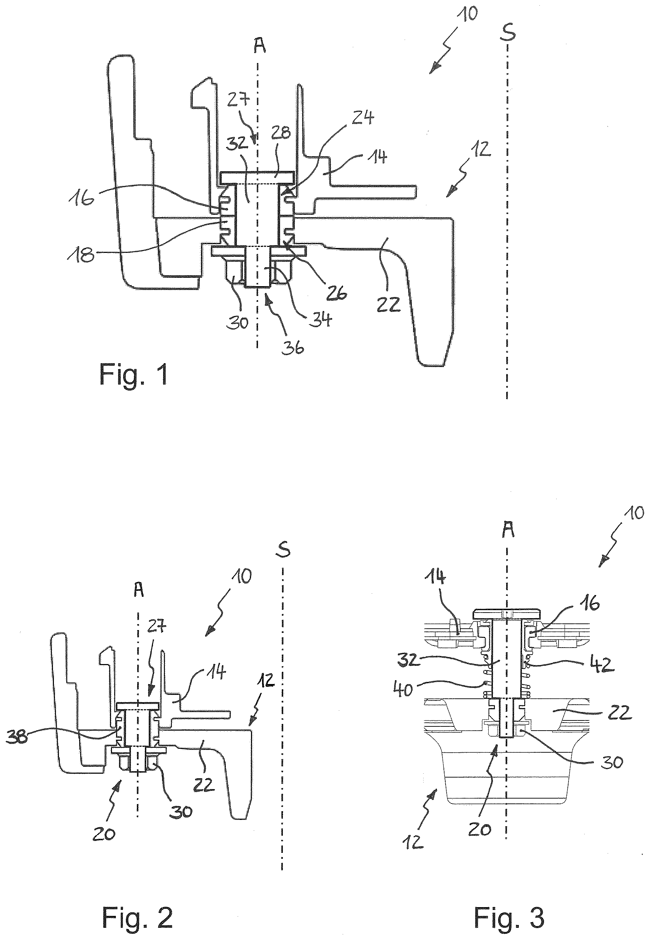

Die Figuren 1 bis 3 zeigen verschiedene Ausführungsformen einer Lenkradbaugruppe 10 eines Fahrzeuglenkrads, mit einem Lenkradskelett 12, einem Anbindungsbauteil 14, wenigstens einem elastischen Dämpfungselement 16, 18, welches das Anbindungsbauteil 14 schwingfähig mit dem Lenkradskelett 12 koppelt, und einem Verbindungselement 20 zur Befestigung des Anbindungsbauteils 14 am Lenkradskelett 12. Dabei ist das Verbindungselement 20 über das wenigstens eine elastische Dämpfungselement 16, 18 sowohl am Anbindungsbauteil 14 als auch am Lenkradskelett 12 schwingungsgedämpft gelagert.

Dargestellt ist jeweils nur ein Ausschnitt der Lenkradbaugruppe 10 mit einer Lagerstelle zwischen dem Anbindungsbauteil 14 und dem Lenkradskelett 12, wobei jedoch insgesamt mehrere, insbesondere drei solcher Lagerstellen zwischen dem Anbindungsbauteil 14 und dem Lenkradskelett 12 vorgesehen sind.

In den vorliegenden Ausführungsbeispielen ist das Lenkradskelett 12 ein starres Metallteil und bildet den tragenden Kern eines um eine Lenkachse S drehbaren Fahrzeuglenkrads. Das Lenkradskelett 12 kann dabei einstückig oder mehrteilig aufgebaut sein und weist insbesondere einen Nabenabschnitt 22, einen Speichenabschnitt und einen Kranzabschnitt auf.

Das Anbindungsbauteil 14 ist ebenfalls ein im Wesentlichen starrer Körper, der beispielsweise aus Metall oder Kunststoff hergestellt wird. Vorzugsweise ist das Anbindungsbauteil 14 eine Montageplatte für ein vorgefertigtes Gassackmodul, welches nach dem Zusammenbau der Lenkradbaugruppe 10 an der Montageplatte befestigt, insbesondere einfach mit der Montageplatte verrastet wird.

Das Verbindungselement 20 umfasst gemäß den Figuren 1 bis 3 einen starren Verbindungsbolzen mit einer Bolzenachse A, der aus einem Metall gefertigt und hier konkret als Schraubbolzen 27 ausgebildet ist. Im Anbindungsbauteil 14 sowie im Nabenabschnitt 22 des Lenkradskeletts 12 ist jeweils eine Befestigungsöffnung 24, 26 vorgesehen, wobei sich der Verbindungsbolzen längs seiner Bolzenachse A durch diese Befestigungsöffnungen 24, 26 hindurch erstreckt.

Gemäß Figur 1 ist ein separates erstes Dämpfungselement 16 vorgesehen, welches das Verbindungselement 20 schwingfähig mit dem Anbindungsbauteil 14 koppelt, sowie ein separates zweites Dämpfungselement 18, welches das Verbindungselement 20 schwingfähig mit dem Lenkradskelett 12 koppelt.

Die Dämpfungselemente 16, 18 sind jeweils aus einem elastischen Material, insbesondere einem Elastomer hergestellt, wobei das erste Dämpfungselement 16 als Dämpfungshülse ausgeführt ist und mit Bezug auf die Bolzenachse A radial zwischen dem Verbindungsbolzen und einem Rand der Befestigungsöffnung 24 des Anbindungsbauteils 14 angeordnet ist. Das zweite Dämpfungselement 18 ist ebenfalls als Dämpfungshülse ausgeführt und mit Bezug auf die Bolzenachse A radial zwischen dem Verbindungsbolzen und einem Rand der Befestigungsöffnung 26 des Lenkradskeletts 12 angeordnet.

Das erste Dämpfungselement 16 ist über eine Formschlussverbindung im Wesentlichen axial spielfrei am Anbindungsbauteil 14 fixiert. Hierzu ist am Rand der Befestigungsöffnung 24 ein radial einwärts ragender Vorsprung vorgesehen, der in einen radial außenseitigen Nutabschnitt des hülsenförmigen Dämpfungselements 16 eingreift.

Entsprechend ist das zweite Dämpfungselement 18 über eine Formschlussverbindung im Wesentlichen spielfrei am Lenkradskelett 12 fixiert. Hierzu ist am Rand der Befestigungsöffnung 26 ein radial einwärts ragender Vorsprung vorgesehen, der in einen radial außenseitigen Nutabschnitt des hülsenförmigen Dämpfungselements 18 eingreift.

Gemäß Figur 1 sind die beiden Dämpfungselemente 16, 18 identisch ausgeführt und lediglich spiegelverkehrt angeordnet.

Allerdings können sich die beiden Dämpfungselemente 16, 18 in alternativen Ausführungsvarianten der Lenkradbaugruppe 10 insbesondere hinsichtlich Material und/oder Geometrie unterscheiden, um die Dämpfungscharakteristik zwischen dem Anbindungsbauteil 14 und dem Verbindungselement 20 unabhängig von der Dämpfungscharakteristik zwischen dem Lenkradskelett 12 und dem Verbindungselement 20 einstellen zu können.

Das Verbindungselement 20 umfasst gemäß Figur 1 einen Schraubbolzen 27 mit einem Schraubenkopf 28 und einem Schraubenschaft sowie eine zumindest teilweise auf den Schraubenschaft aufdrehbare Schraubenmutter 30. Der Schraubbolzen 27 erstreckt sich in axialer Richtung konkret vom Schraubenkopf 28 über einen ersten Schaftabschnitt 32 und einen angrenzenden zweiten Schaftabschnitt 34 bis zu einem freien Ende 36, wobei die Schaftabschnitte 32, 34 unterschiedliche Schaftdurchmesser aufweisen. Im vorliegenden Fall ist der Schaftdurchmesser des zweiten Schaftabschnitts 34 kleiner als der Schaftdurchmesser des ersten Schaftabschnitts 32, sodass zwischen den Schaftabschnitten 32, 34 ein radialer Absatz vorhanden ist, der einen definierten Anschlag für die Schraubenmutter 30 bildet.

Die Schraubenmutter 30 ist bis zum radialen Absatz auf den zweiten Schaftabschnitt 34 aufgeschraubt, während die hülsenförmigen Dämpfungselemente 16, 18 axial zwischen dem Schraubenkopf 28 und der Schraubenmutter 30 im Bereich des ersten Schaftabschnitts 32 angeordnet sind. Die axiale Abmessung des ersten Schaftabschnitts 32 sowie der Dämpfungselemente 16, 18 ist dabei vorzugsweise so gewählt, dass die Dämpfungselemente 16, 18 zwischen Schraubenkopf 28 und Schraubenmutter 30 geklemmt sind und damit eine definierte axiale Vorspannung aufweisen. Über diese Vorspannung lässt sich mit geringem Aufwand das Resonanzfeld der Schwingungstilgerkonstruktion beeinflussen und idealerweise auf einen gewünschten Frequenzbereich einstellen.

Die Figur 2 zeigt eine weitere Ausführungsform der Lenkradbaugruppe 10, welche sich von der in Figur 1 dargestellten Ausführungsform lediglich dadurch unterscheidet, dass das erste Dämpfungselement 16 und das zweite Dämpfungselement 18 einstückig ausgeführt sind und ein einziges Dämpfungselement 38 bilden. Auch in diesem Fall ist jedoch das Verbindungselement 20 über das genau eine elastische Dämpfungselement 38 sowohl am Anbindungsbauteil 14 als auch am Lenkradskelett 12 schwingungsgedämpft gelagert.

Dies reduziert die Anzahl der Einzelbauteile und vereinfacht den konstruktiven Aufbau der Lenkradbaugruppe 10. Allerdings können für die schwingfähige Kopplung des Verbindungselements 20 mit dem Anbindungsteil 14 und die schwingfähige Kopplung des Verbindungselements 20 mit dem Lenkradskelett 12 keine unterschiedlichen Dämpfungsmaterialien mehr verwendet werden, sodass hier die Einstellbarkeit der Dämpfungscharakteristik eingeschränkt ist.

Die Figur 3 zeigt noch eine weitere Ausführungsform der Lenkradbaugruppe 10, welche sich von der in Figur 1 dargestellten Ausführungsform hauptsächlich dadurch unterscheidet, dass die beiden separaten Dämpfungselemente 16, 18 nicht axial aneinander anliegen, sondern axial beabstandet sind.

Bei dieser Konstruktion der Lenkradbaugruppe 10 sind aufgrund des längeren Hebels größere Schwingungsamplituden zwischen dem Anbindungsbauteil 14 und dem Lenkradskelett 12 möglich.

Axial zwischen den beiden Dämpfungselementen 16, 18 ist gemäß Figur 3 eine Druckfeder 40 vorgesehen, welche den ersten Schaftabschnitt 32 des Schraubbolzens 27 in Umfangsrichtung umschließt und sich einerseits am Lenkradskelett 12 sowie andererseits über eine Gleithülse 42 am Schraubenkopf 28 abstützt.

Das Anbindungsbauteil 14 ist über das erste Dämpfungselement 16 schwingungsgedämpft an der Gleithülse 42 und über die Gleithülse 42 entsprechend auch schwingungsgedämpft am ersten Schaftabschnitt 32 des Schraubbolzens 27 gelagert, wobei die Gleithülse 42 eine axiale Bewegung relativ zum ersten Schaftabschnitt 32 ausführen kann.

Dementsprechend findet in diesem Fall eine Relativbewegung zum Betätigen der Fahrzeughupe zwischen dem Anbindungsbauteil 14 und dem Lenkradskelett 12 statt. Dabei wird das Anbindungsbauteil 14 mitsamt dem ersten Dämpfungselement 16 und der Gleithülse 42 durch axialen Druck auf das Anbindungsbauteil 14 entgegen der Kraft der Druckfeder 40 längs des ersten Schaftabschnitts 32 verschoben, bis ein gewünschtes Hupsignal ertönt und anschließend durch die Druckfeder 40 wieder in die Ausgangsposition gemäß Figur 3 rückgestellt.

Das zweite Dämpfungselement 18 ist hier im Bereich des zweiten Schaftabschnitts 34 axial zwischen dem Absatz des Schraubenschafts und der Schraubenmutter 30 angeordnet, wobei über die Schraubenmutter 30 eine gewünschte axiale Vorspannung auf das zweite Dämpfungselement 18 aufgebracht werden kann.

## Patentansprüche

1. Lenkradbaugruppe mit
einem Lenkradskelett (12),
einem Anbindungsbauteil (14),
einem Verbindungselement (20) zur Befestigung des Anbindungsbauteils (14) am Lenkradskelett (12), sowie
einem ersten elastischen Dämpfungselement (16), welches das Verbindungselement (20) schwingfähig mit dem Anbindungsbauteil (14) koppelt,
wobei ein zweites elastisches Dämpfungselement (18) vorgesehen ist, welches das Verbindungselement (20) schwingfähig mit dem Lenkradskelett (12) koppelt,
wobei das Lenkradskelett (12) und das Anbindungsbauteil (14) Befestigungsöffnungen (24, 26) aufweisen, wobei das Verbindungselement (20) einen Verbindungsbolzen umfasst, der sich längs einer Bolzenachse (A) durch diese Befestigungsöffnungen (24, 26) hindurch erstreckt,
wobei das erste Dämpfungselement (16) als Dämpfungshülse ausgeführt und mit Bezug auf die Bolzenachse (A) radial zwischen dem Verbindungsbolzen und einem Rand der Befestigungsöffnung (24) des Anbindungsbauteils (14) angeordnet ist,
**dadurch gekennzeichnet, dass** das zweite Dämpfungselement (18) als Dämpfungshülse ausgeführt und mit Bezug auf die Bolzenachse (A) radial zwischen dem Verbindungsbolzen und einem Rand der Befestigungsöffnung (26) des Lenkradskeletts (12) angeordnet ist.

2. Lenkradbaugruppe nach Anspruch 1, **dadurch gekennzeichnet, dass** das Anbindungsbauteil (14) eine Montageplatte für ein Gassackmodul ist.

3. Lenkradbaugruppe nach einem der vorhergehenden Ansprüche, **dadurch gekennzeichnet, dass** das erste Dämpfungselement (16) im Wesentlichen spielfrei am Anbindungsbauteil (14) fixiert, insbesondere formschlüssig mit dem Anbindungsbauteil (14) verbunden ist.

4. Lenkradbaugruppe nach einem der vorhergehenden Ansprüche, **dadurch gekennzeichnet, dass** das zweite Dämpfungselement (18) im Wesentlichen spielfrei am Lenkradskelett (12) fixiert, insbesondere formschlüssig mit dem Lenkradskelett (12) verbunden ist.

5. Lenkradbaugruppe nach einem der vorhergehenden Ansprüche, **dadurch gekennzeichnet, dass** wenigstens eines der Dämpfungselemente (16, 18) axial vorgespannt ist.

6. Lenkradbaugruppe nach einem der vorhergehenden Ansprüche, **dadurch gekennzeichnet, dass** das Verbindungselement (20) einen Schraubbolzen (27) mit einem Schraubenkopf (28) und einem Schraubenschaft sowie eine zumindest teilweise auf den Schraubenschaft aufdrehbare Schraubenmutter (30) umfasst.

7. Lenkradbaugruppe nach Anspruch 6, **dadurch gekennzeichnet, dass** sich der Schraubbolzen (27) in axialer Richtung vom Schraubenkopf (28) über einen ersten Schaftabschnitt (32) und einen angrenzenden zweiten Schaftabschnitt (34) bis zu einem freien Ende (36) erstreckt, wobei die Schaftabschnitte (32, 34) unterschiedliche Schaftdurchmesser aufweisen, die Schraubenmutter (30) auf den zweiten Schaftabschnitt (34) aufgeschraubt ist und die Dämpfungselemente (16, 18) im Bereich des ersten Schaftabschnitts (32) axial zwischen dem Schraubenkopf (28) und der Schraubenmutter (30) angeordnet sind.

8. Lenkradbaugruppe nach einem der vorhergehenden Ansprüche, **dadurch gekennzeichnet, dass** das erste Dämpfungselement (16) und das zweite Dämpfungselement (18) einstückig ausgeführt sind und ein einziges Dämpfungselement (38) bilden.

9. Lenkradbaugruppe nach einem der vorhergehenden Ansprüche, **dadurch gekennzeichnet, dass** in einer unbelasteten Grundstellung der Lenkradbaugruppe (10) sowohl das Anbindungsbauteil (14) als auch das Lenkradskelett (12) vom Verbindungselement (20) beabstandet sind und sich ausschließlich über das erste elastische Dämpfungselement (16) und/oder das zweite elastische Dämpfungselement (18) am Verbindungselement (20) abstützen.

## Claims

1. A steering wheel assembly comprising
a steering wheel skeleton (12),
an attachment component (14),
a connection element (20) for fastening the attachment component (14) to the steering wheel skeleton (12), and
a first resilient damping element (16) that couples the connection element (20) to the attachment component (14) so as to be able to oscillate,
wherein a second resilient damping element (18) is provided which couples the connection element (20) to the steering wheel skeleton (12) so as to be able to oscillate,
wherein the steering wheel skeleton (12) and the attachment component (14) include fastening holes (24, 26), wherein the connection element (20) comprises a connecting bolt that extends along a bolt axis (A) through said fastening holes (24, 26),
wherein the first damping element (16) is in the form of a damping sleeve and, with respect to the bolt axis (A) is radially arranged between the connecting bolt and an edge of the fastening hole (24) of the attachment component (14),
**characterized in that** the second damping element (18) is in the form of a damping sleeve and, with respect to the bolt axis (A) is radially arranged between the connecting bolt and an edge of the fastening hole (26) of the steering wheel skeleton (12).

2. The steering wheel assembly according to claim 1, **characterized in that** the attachment component (14) is a mounting plate for an airbag module.

3. The steering wheel assembly according to any one of the preceding claims, **characterized in that** the first damping element (16) is fixed substantially free from play, especially positively connected, to the attachment component (14).

4. The steering wheel assembly according to any one of the preceding claims, **characterized in that** the second damping element (18) is fixed substantially free from play, especially positively connected, to the steering wheel skeleton (12).

5. The steering wheel assembly according to any one of the preceding claims, **characterized in that** at least one of the damping elements (16, 18) is axially biased.

6. The steering wheel assembly according to any one of the preceding claims, **characterized in that** the connection element (20) comprises a screw bolt (27) having a screw head (28) and a screw shank as well as a screw nut (30) that can be screwed at least partially onto the screw shank.

7. The steering wheel assembly according to claim 6, **characterized in that** the screw bolt (27) extends in the axial direction from the screw head (28) via a first shank portion (32) and an adjacent second shank portion (34) to a free end (36), wherein the shank portions (32, 34) have different shank diameters, the screw nut (30) is screwed onto the second shank portion (34) and the damping elements (16, 18) are axially arranged between the screw head (28) and the screw nut (30) in the area of the first shank portion (32).

8. The steering wheel assembly according to any one of the preceding claims, **characterized in that** the first damping element (16) and the second damping element (18) are integrally formed and constitute one single damping element (38).

9. The steering wheel assembly according to any one of the preceding claims, **characterized in that**, in an unloaded home position of the steering wheel assembly (10), both the attachment component (14) and the steering wheel skeleton (12) are spaced apart from the connection element (20) and bear against the connection element (20) exclusively via the first resilient damping element (16) and/or the second resilient damping element (18).

## Revendications

1. Ensemble de volant de direction comprenant
une armature de volant de direction (12),
un élément de fixation (14),
un élément de liaison (20) pour la fixation de l'élément de fixation (14) à l'armature de volant de direction (12), ainsi que
un premier élément d'amortissement élastique (16), lequel couple l'élément de liaison (20) de manière oscillante avec l'élément de fixation (14),
pour lequel un deuxième élément d'amortissement élastique (18) est prévu, lequel couple l'élément de liaison (20) de manière oscillante avec l'armature de volant de direction (12),
pour lequel l'armature de volant de direction (12) et l'élément de fixation (14) présentent des ouvertures de fixation (24, 26), pour lequel l'élément de liaison (20) comprend un boulon de liaison, lequel s'étend le long d'un axe de boulon (A) à travers ces ouvertures de fixation (24, 26),
pour lequel le premier élément d'amortissement (16) est réalisé sous la forme d'une douille d'amortissement et est disposé radialement, par rapport à l'axe de boulon (A), entre le boulon de liaison et un bord de l'ouverture de fixation (24) de l'élément de fixation (14),
**caractérisé en ce que** le deuxième élément d'amortissement (18) est réalisé sous forme de douille d'amortissement et est disposé radialement, par rapport à l'axe de boulon (A), entre le boulon de liaison et un bord de l'ouverture de fixation (26) de l'armature de volant de direction (12).

2. Ensemble de volant de direction selon la revendication 1, **caractérisé en ce que** l'élément de fixation (14) est une plaque de montage pour un module de coussin gonflable.

3. Ensemble de volant de direction selon l'une des revendications précédentes, **caractérisé en ce que** le premier élément d'amortissement (16) est fixé essentiellement sans jeu sur l'élément de fixation (14), en particulier est relié par emboitement à l'élément de fixation (14).

4. Ensemble de volant de direction selon l'une des revendications précédentes, **caractérisé en ce que** le deuxième élément d'amortissement (18) est fixé essentiellement sans jeu sur l'armature de volant de direction (12), en particulier est relié par emboitement à l'armature de volant de direction (12).

5. Ensemble de volant de direction selon l'une des revendications précédentes, **caractérisé en ce qu'**au moins l'un des éléments d'amortissement (16, 18) est précontraint axialement.

6. Ensemble de volant de direction selon l'une des revendications précédentes, **caractérisé en ce que** l'élément de liaison (20) comprend un boulon fileté (27) avec une tête de vis (28) et une tige de vis ainsi qu'un écrou fileté (30) pouvant être vissé au moins partiellement sur la tige de vis.

7. Ensemble de volant de direction selon la revendication 6, **caractérisé en ce que** le boulon fileté (27) s'étend dans la direction axiale depuis la tête de vis (28) jusqu'à une extrémité libre (36) en passant par un premier tronçon de tige (32) et un deuxième tronçon de tige (34) adjacent, pour lequel les tronçons de tige (32, 34) présentent des diamètres de tige différents, l'écrou de vis (30) est vissé sur le deuxième tronçon de tige (34) et les éléments d'amortissement (16, 18) sont disposés axialement dans la zone du premier tronçon de tige (32) entre la tête de vis (28) et l'écrou de vis (30).

8. Ensemble de volant de direction selon l'une des revendications précédentes, **caractérisé en ce que** le premier élément d'amortissement (16) et le deuxième élément d'amortissement (18) sont réalisés d'une seule pièce et forment un seul élément d'amortissement (38).

9. Ensemble de volant de direction selon l'une des revendications précédentes, **caractérisé en ce que**, dans une position de base non chargée de l'ensemble de volant de direction (10), aussi bien l'élément de fixation (14) que l'armature de volant de direction (12) sont espacés de l'élément de liaison (20) et s'appuient sur l'élément de liaison (20) exclusivement par l'intermédiaire du premier élément d'amortissement élastique (16) et/ou du deuxième élément d'amortissement élastique (18).
